# EUROPEAN PATENT APPLICATION

(11) **EP 0 598 454 A1**
(43) Date of publication of application: **25.05.1994**
(21) Application number: 93203184.2
(22) Date of filing: 15.11.1993
(51) Int. Cl.: G01C 11/00, H04N 5/33

(54) **Method, system and vehicle for making and analyzing multispectral recorded images**

(30) Priority: 19.11.1992 NL 9202019
(71) Applicant: GATSO SPECIAL PRODUCTS B.V., NL-2501 EE Overveen (NL)
(72) Inventor: Gatsonides, Tom, NL-2116 EH Bentveld (NL)
(74) Representative: Bartelds, Erik

(57) **Abstract**

The invention relates to a method for making and analyzing multispectral recorded images, comprising the steps of:
making at least one recorded image of radiation detectable by the human eye and at least one recorded image of radiation not detectable by the human eye,
subjecting at least one of the recorded images to at least one processing in "real time", and
reproducing at least the processed recorded image(s).

The invention further relates to a system for performing this method comprising at least one image recording device which is sensitive to radiation detectable by the human eye and at least one image recording device sensitive to radiation not detectable by the human eye, programmable means connected to the image recording devices for processing recorded images made thereby, means connected to the recorded image processing means for reproducing the processed recorded images and means connected to the image recording devices for storing the recorded images.

Finally, the invention further relates to a vehicle provided with such a system.

## Description

The present invention relates to a method for making and analyzing multispectral recorded images.

Different methods are already known wherein, for instance using an infrared scanner, recorded images are made of radiation not detectable by the human eye, while at the same time using a camera recorded images are made of radiation detectable by the human eye. In one of the known methods, which is used in air reconnaissance, recorded images are made in the air and stored, and subsequently further processed and analyzed on the ground. This method is however relatively time- and labour-intensive, while an evaluation of whether the recorded images are of any use can moreover only be made after processing and analysis. If the recorded images reveal interesting data with respect to which further recorded images are desired, another flight must be made each time.

In another known method the recorded image invisible to the human eye is processed in "real time" to a visible image and added to the visible recorded image made using the camera. This method has the drawback that the processing of the invisible image is fixed and always the same data is thus made visible from the non-visible recorded image, while moreover the information density of the combined recorded image is extremely high and the analysis of the data present in the recorded image made more difficult. In addition this method does not always provide sharp recorded images due to the infrared scanner and the camera not always coinciding.

The present invention has for its object to provide an improved method for making and analyzing multispectral recorded images. This is achieved according to the invention by a method as described above comprising the steps of making at least one recorded image of radiation detectable by the human eye and at least one recorded image of radiation not detectable by the human eye, subjecting at least one of the recorded images to at least one processing in "real time" and reproducing at least the processed recorded image(s).

In preference the processing step comprises dividing the spectrum of the recorded image into a number of sub-spectra, determining the associated sub-spectrum for each pixel of the recorded image and assigning a particular colour to each pixel located within a determined sub-spectrum. In this way radiation differences can be made clearly visible. In order to prevent the information density in a single recorded image becoming too high to make worthwhile observations, at least one sub-spectrum is preferably chosen and only each chosen sub-spectrum is reproduced.

When a number of recorded images are reproduced separately, a large amount of information can be presented in easily referenced manner without the danger of loss of image sharpness.

In preference the processing step further comprises recording the number of pixels of the recorded image located within at least one of the sub-spectra and determining and reproducing statistical data on the basis thereof. The information present in each recorded image can thus be subjected in simple manner to a first analysis by the user.

In order to be able to subject the recorded images and the data obtained therefrom to a thorough analysis at a later stage, the method according to the invention preferably comprises the step of storing at least one of the recorded images and the statistical data associated therewith.

The invention also relates to a system for performing the above described method. Systems are already known for making multispectral recorded images consisting of an infrared scanner, a photo or film camera and storage means connected to the scanner. With such a system recorded images can be made for later analysis and interpretation.

Systems are also known with an infrared scanner and a video camera which are each connected to a video mixing unit. With such a system recorded images made by the scanner and cameras can be viewed in "real time". However, because the recorded images are made from different pixels, the resulting combined image is often not fully focussed. The information density of the reproduced image is moreover often too high for a useful analysis.

The present invention therefore has for its object to provide an improved system for making and analyzing multispectral recorded images. A preferred embodiment of the system according to the invention comprises at least one image recording device which is sensitive to radiation detectable by the human eye and at least one image recording device sensitive to radiation not detectable by the human eye, programmable means connected to the image recording devices for processing recorded images made thereby, means connected to the recorded image processing means for reproducing the processed recorded images and means connected to the image recording devices for storing the recorded images.

In preference the storing means are connected to the image recording means with interposing of the recorded image processing means. Already processed recorded images can thus be stored if desired.

When recorded image processing means are adapted for transmitting to the reproducing means a part of the spectrum of each of the image recording devices to be selected by the user, relevant information present in each recorded image can be provided in a clear manner to the user.

The reproducing means are preferably adapted for separate reproduction of a number of recorded images at the same time. In this manner a large amount of data can be presented in a convenient way.

For the purpose of computational processing of the recorded images the system according to the invention is preferably provided with means connected to the recorded image processing means for recording data relating to the recorded images made by the image recording devices and with programmable computing means connected to the recording means.

For a simple interpretation of the information contained in the recorded image the computing means are preferably adapted for performing statistical operations on the data recorded by the recording means.

An exceptionally compact system is obtained when the recorded image processing means, the recording means and the computing means are integrated in a single device.

In order to minimalize the cost of the system and to maximalize the flexibility thereof, the recorded image processing means are formed by a personal computer.

A compact, robust system of comparatively favourable price is obtained when at least one of the image recording devices is a CCD camera.

The invention finally relates to a vehicle provided with a system as described above, with which in a relatively short time multispectral recorded images of a large area can therefore be made and analyzed in "real time".

The invention will now be elucidated in the light of an embodiment, wherein reference is made to the annexed drawing, in which:
fig. 1 shows a schematic survey of a system according to the invention,
fig. 2 is a perspective view of an aircraft provided with the system of fig. 1, and
fig. 3 shows a flow diagram of the recorded image processing step of the method according to the invention.

A system 1 for making multispectral recorded image comprises an image recording device 2 which is sensitive to radiation not detectable by the human eye, for instance an infrared camera, and three image recording devices 3 each sensitive to radiation that is detectable by the human eye. The cameras 2, 3 are semiconductor cameras of the CCD (charge-coupled device) type. Cameras 2, 3 are each connected to an interface 4 to which feed lines 5, 6 are also connected. The first feed line 5 is connected to a power supply source (not shown), for instance a battery on board a vehicle in which the system 1 is arranged, while the second feed line 6 is connected via a converter 7 to an outside feed (not shown), for instance the mains supply. The second feed line 6 is preferably used when the vehicle carrying the system 1 is stationary in order to relieve the onboard battery.

Via the interface 4 the cameras 2, 3 are connected for processing recorded images made thereby to programmable means 8 in the form of a personal computer 9. The cameras 2, 3 are also connected, for storing recorded images made thereby, via the interface 4 to analog means in the form of a video recorder 10, and via the recorded image processing means 8 also to digital storage means in the form of a disk-drive 11. Finally, the cameras 2, 3 are connected via interface 4 and recorded image processing means 8 to means 12, 13 for reproducing the recorded images processed by the processing means 8. These reproducing means are formed in the case shown by an RGB monitor 12 and a VGA monitor 13. The RGB monitor 12 is further connected to the analog storage means 10 for storing processed recorded images reproduced on monitor 12 and for reproducing previously stored recorded images. In addition the RGB monitor 12 and the video recorder 10 each have an output line 14 respectively 15 whereby they are connected to a printer unit 16.

The recorded image processing means 8 are programmable by means of input means 17. These input means can comprise a keyboard but also a so-called mouse, optionally in combination with a command menu. The input means can also comprise a disk-drive for reading program instructions stored on disks. Using the recorded image processing means 8 parts of the recorded image of the different cameras 2, 3 to be chosen by a user can be reproduced in different ways on the monitors 12, 13. The recorded image processing means 8 thus comprise a sub-program 18 for separately reproducing recorded images of one of the cameras 2, 3 on one of the monitors at the same time, or for separately reproducing a recorded image processed in different ways. In addition, the recorded image processing means 8 can be connected to means 19 for recording data relating to the recorded images, which recording means 19 are connected in turn to programmable computing means 20 for performing statistical operations on the recorded data. The results of this statistical operation can be shown on the monitors 12, 13, for instance in the form of graphs, histograms, pie charts and the like. Just as the recorded image processing means 8, the recording means 19 and the computing means 20 can form part of the personal computer 9.

The recorded image processing means 8 are programmed to allow the user to choose a determined number of sub-spectra, to divide the spectrum of a recorded image into the chosen number of sub-spectra, to allow assigning of a colour to each sub-spectrum by the user, and to cause the recorded image to be reproduced on one of the monitors 12, 13 with the chosen sub-spectra in the colour selected therefor. The recorded image processing means 8 are also programmed to allow choice of one or more sub-spectra by the user and to cause only the selected sub-spectra of the recorded image to be reproduced on one of the monitors 12, 13.

The three cameras 3 sensitive to visible light can also be sensitive to the total visible spectrum of wavelengths between about 350 nm and 850 nm. When a recorded image from such a camera 3 is digitalized and reproduced on one of the monitors 12, 13 by the recorded image processing means 8, the spectral resolution amounts to approximately 2 nm with the standard palette of 256 colour graduations usual with a personal computer. The sensitivity range of the cameras 3 can however be reduced by an appropriate choice of filters to a part of the visible spectrum, whereby the spectral resolution will thus increase at a constant number of colour graduations. The three visible light cameras 3 can otherwise be provided with respectively a red, green/yellow and blue filter whereby a colour recorded image results after mixing of the recorded images from these cameras 3.

The infrared camera 2 can have an adjustable temperature sensitivity whereby the thermal resolution can be varied when the number of colour graduations for reproducing remains the same. When for instance the infrared camera 2 is adjusted such that the temperature difference between a wholly black recorded image (cold) and a wholly white recorded image (hot) amounts to 100°C, the thermal resolution is about 0.4°C with the usual 256 colour graduations.

The video recorder 10, the sound recording channels of which remain unused during storage of the recorded images, can also be connected to for instance a microphone for recording comments relating to the recorded images made. Recorder 10 can also be connected to for instance a navigation system of the vehicle in which the system 1 is installed, whereby navigational data associated with the stored recorded image can be recorded on one or more sound channels.

All the composite parts of the system 1 can be commercially available, suitably programmed standard components. The cost of the system 1 is thus low, while in addition the system 1 can be expanded and adapted in simple manner.

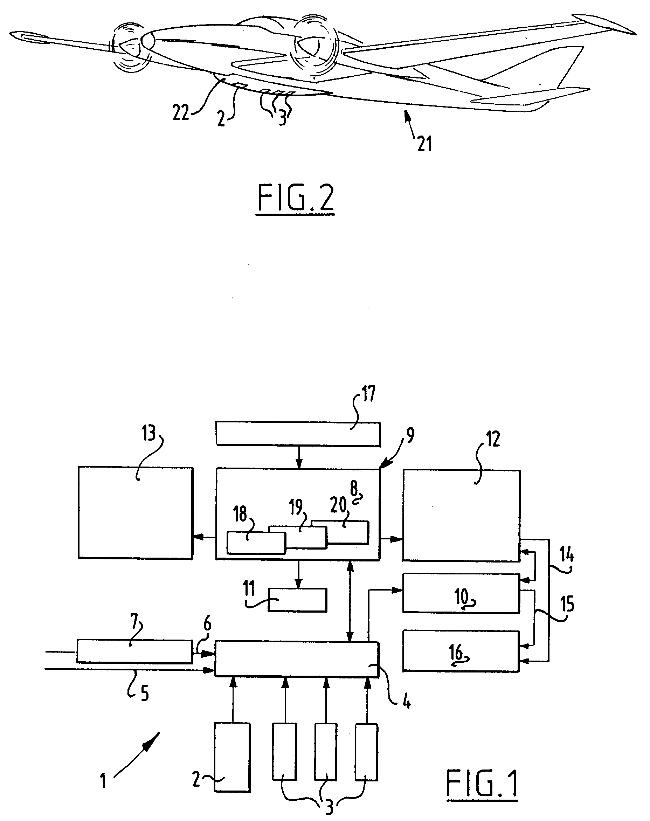

The system 1 can be arranged in a vehicle, for example an aircraft 21 (fig. 2), whereby recorded images can be made of a large area in a comparatively short time. Cameras 2, 3 can be accommodated for this purpose in a container 22 which can be attached under the aircraft 21, while the other components of system 1 can be arranged in the body of the aircraft.

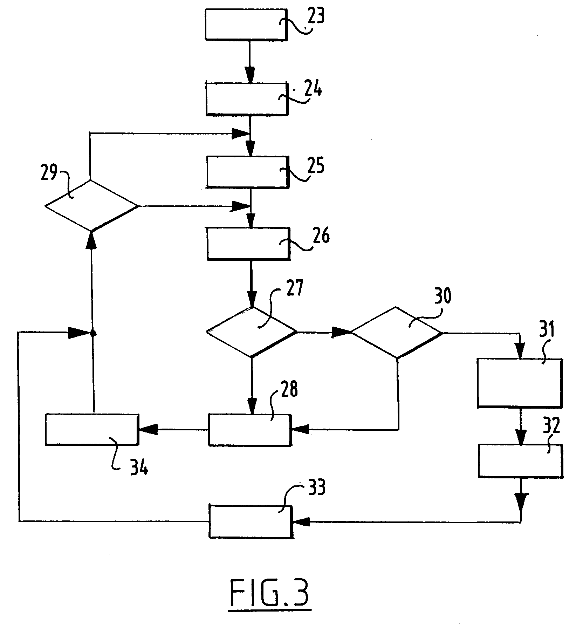

The user can process and combine the recorded image made in many different ways. One of the most important processing options of the system and the method according to the invention is dividing the recorded image into sub-spectra and reproducing one or more selected sub-spectra. According to the algorithm shown in fig. 3 for reproducing a single sub-spectrum, for this purpose one of the cameras 2, 3 is first selected for processing in block 23. Subsequently the lowest reference value λmin and highest reference value λmax of the wavelength for the desired sub-spectrum are input into block 24. Thereafter a recorded image of the selected camera is read into block 25. This recorded image is then analyzed per pixel. The wavelength λ1 of the light in the first pixel of the input recorded image is determined (block 26) and compared in block 27 to the lowest reference value λmin. If λ1 is smaller than λmin, the examined pixel of the recorded image lies outside the sub-spectrum chosen by the user and must therefore not be reproduced. In the processed recorded image this pixel must therefore remain black. To this end a signal corresponding with the colour black is added to this pixel in block 28. In block 34 a signal is then sent to the recording means 19 that the examined pixel is located outside the chosen sub-spectrum. The recording means 19 record this data for later statistical processing by the computing means 20. In block 29 is then determined whether there are still unprocessed pixels. If this is the case, the program returns to block 26 and determines the wavelength λ1 of a following pixel of the recorded image. When there are no longer any unprocessed pixels the program returns to block 25 and reads a new recorded image.

When on the other hand it is found in block 27 that the wavelength of the examined pixel is greater than λmin, the wavelength λ1 is compared in block 30 to the highest reference value of the selected sub-spectrum λmax. If λ1 is greater than λmax, the examined pixel likewise lies outside the selected sub-spectrum. Once again the pixel is then made black in block 28 and the program returns via block 34 and block 29 to block 25 or block 26.

Should it be found however in block 30 that the wavelength of the examined pixel is lower than the highest reference value λmax, the pixel then lies within the chosen sub-spectrum and must therefore be reproduced. For this purpose a colour signal is generated in block 31. This can be a signal for a single colour to be selected by the user be a signal for a single colour to be selected by the user which applies to all pixels in the sub-spectrum, or a signal for a colour graduation associated with the position of the wavelength of the examined pixel within the whole of the examined sub-spectrum. In block 32 the colour signal selected or calculated in block 31 is added to the pixel, whereafter in block 33 a signal is sent to the recording means that a pixel has been found that is located within the selected sub-spectrum. The program then returns via block 29 to block 25 or block 26.

The data transmitted in blocks 33 or 34 to the recording means are subjected after processing of the full recorded image by the computing means 20 to a statistical operation, the results of which can be shown on one of the monitors 12, 13 in the form of for instance graphs, histograms or pie charts. Hereby, and because only those pixels of a recorded image are made visible which are located within a part of the spectrum selected by the user, the composition of a recorded image can be subjected in simple manner to a provisional evaluation, so that the recording schedule can still be adapted, for instance during a recording flight.

## Claims

1. Method for making and analyzing multispectral recorded images, comprising the steps of:
making at least one recorded image of radiation detectable by the human eye and at least one recorded image of radiation not detectable by the human eye,
subjecting at least one of the recorded images to at least one processing in "real time", and
reproducing at least the processed recorded image(s).

2. Method as claimed in claim 1, **characterized in that** the processing step comprises dividing the spectrum of the recorded image into a plurality of sub-spectra, determining the associated sub-spectrum for each pixel of the recorded image and assigning a particular colour to each pixel located within a determined sub-spectrum.

3. Method as claimed in claim 2, **characterized in that** at least one sub-spectrum is chosen and only each chosen sub-spectrum is reproduced.

4. Method as claimed in any of the foregoing claims, **characterized in that** a plurality of recorded images are reproduced separately.

5. Method as claimed in any of the claims 2-4, **characterized in that** the processing step further comprises recording the plurality of pixels of the recorded image located within at least one of the sub-spectra and determining and reproducing statistical data on the basis thereof.

6. Method as claimed in claim 5, **characterized by** the step of storing at least one of the recorded images and the statistical data associated therewith.

7. System (1) evidently intended for performing the method as claimed in any of the foregoing claims.

8. System (1) as claimed in claim 7, **characterized by** at least one image recording device (3) which is sensitive to radiation detectable by the human eye and at least one image recording device (2) sensitive to radiation not detectable by the human eye, programmable means (8) connected to the image recording devices (2, 3) for processing recorded images made thereby, means (12, 13) connected to the recorded image processing means (8) for reproducing the processed recorded images and means (10, 11) connected to the image recording devices (2, 3) for storing the recorded images.

9. System (1) as claimed in claim 8, **characterized in that** a part of the storing means (10, 11) is connected to the image recording means (2, 3) with interposing of the recorded image processing means (8).

10. System (1) as claimed in claim 8 or 9, **characterized in that** the recorded image processing means (8) are adapted for transmitting to the reproducing means (12,13) a part of the spectrum of each of the image recording devices (2,3) to be selected by the user.

11. System (1) as claimed in any of the claims 8-10, **characterized in that** the reproducing means (12,13) are adapted for separate reproduction of a plurality of recorded images at the same time.

12. System (1) as claimed in any of the claims 8-11, **characterized by** means (9) connected to the recorded image processing means (8) for recording data relating to the recorded images made by the image recording devices (2,3) and programmable computing means (20) connected to the recording means (19).

13. System (1) as claimed in claim 12, **characterized in that** the computing means (20) are adapted for performing statistical operations on the data recorded by the recording means (19).

14. System (1) as claimed in claim 12 or 13, **characterized in that** the recorded image processing means (8), the recording means (19) and the computing means (20) are integrated in a single device.

15. System (1) as claimed in any of the claims 8-14, **characterized in that** the recorded image processing means (8) are formed by a personal computer (9).

16. System (1) as claimed in any of the claims 8-15, **characterized in that** at least one of the image recording devices (2,3) is a CCD camera.

17. Vehicle (21) provided with a system (1) as claimed in any of the claims 8-16.
